Europäisches Patentamt

European Patent Office

Office européen des brevets

(19)

(11) Veröffentlichungsnummer : **0 065 593**
**B1**

# (12) EUROPÄISCHE PATENTSCHRIFT

(45) Veröffentlichungstag der Patentschrift :
05.09.84

(21) Anmeldenummer : 81104819.8

(22) Anmeldetag : 23.06.81

(51) Int. Cl.³ : **F 16 K 15/02, F 16 K 47/02**

(54) **Rückschlagventil.**

(30) Priorität : **25.05.81 CH 3404/81**

(43) Veröffentlichungstag der Anmeldung :
**01.12.82 Patentblatt 82/48**

(45) Bekanntmachung des Hinweises auf die Patenterteilung : **05.09.84 Patentblatt 84/36**

(84) Benannte Vertragsstaaten :
**BE DE FR GB SE**

(56) Entgegenhaltungen :
**CH-A- 596 485**
**DE-U- 1 893 360**
**FR-A- 2 328 148**
**US-A- 2 043 453**
**US-A- 2 687 276**
**3R INTERNATIONAL, Band 19, Nr. 9 September 1980**
**WEYAND et al. "Gedämpftes Rückschlagventil zur**
**Lösung von Druckstossproblemen in Hochdruck-**
**Wasserleitungen" Seiten 503 bis 510**

(73) Patentinhaber : **GEBRÜDER SULZER AKTIENGE-**
**SELLSCHAFT**
**Zürcherstrasse 9**
**CH-8401 Winterthur (CH)**

(72) Erfinder : **Tiefenthaler, Edelbert**
**Schützenhausstrasse**
**CH-8353 Elgg (CH)**

(74) Vertreter : **Dipl.-Ing. H. Marsch Dipl.-Ing. K. Sparing**
**Dipl.-Phys. Dr. W.H. Röhl Patentanwälte**
**Rethelstrasse 123**
**D-4000 Düsseldorf (DE)**

**Beschreibung**

Die Erfindung betrifft ein Rückschlagventil nach dem Oberbegriff des Anspruchs 1.

Aus der CH-A-596 485 ist ein solches Rückschlagventil bekannt, das ausser als Rückschlagventil auch als gesteuertes Absperrventil dienen kann. Wird ein solches Ventil z. B. in der Speiseleitung für das Kühlmittel eines Kernreaktors eingesetzt, so könnte es bei einem Bruch der Speiseleitung stromoberhalb des Rückschlagventils so rasch schliessen, dass stromunterhalb des Rückschlagventils ein unzulässig starker Druckstoss auftreten würde.

Es ist Aufgabe der Erfindung, einen solchen Druckstoss durch Herabsetzen der Schliessgeschwindigkeit zu dämpfen.

Diese Aufgabe wird erfindungsgemäss durch die Merkmale nach dem Kennzeichen des Anspruchs 1 gelöst. Das erfindungsgemässe Rückschlagventil hat den besonderen Vorteil, dass es konstruktiv einfach sowie betriebssicher ist und überdies bestehende Teile eines mediumgesteuerten Ventiltyps verwendet werden können.

Verbindungskanäle, die den zwischen Deckel und Kolben liegenden ersten Zylinderraum und den darunterliegenden zweiten Zylinderraum jeweils mit dem austrittseitigen Raum verbinden, sind als solche aus der FR-A 2 328 148 bekannt. Ferner ist es aus der Zeitschrift 3R International, Bd. 19, Nr. 9, Sept. 1980, S. 504, Kap. « Konstruktion u. Funktion » sowie S. 507 Kap. « Druckstösse bei Rohrbruch » bekannt, einen Ventilteller über eine Spindel mit einem Dämpfungskolben zu versehen.

Durch die Merkmale nach Anspruch 2 wird erreicht, dass oberhalb eines gewissen Mindestdurchsatzes des Mediums das Ventil ganz offen steht, weil an der Mündung des ersten Kanals ein durch die Einströmung bedingter Unterdruck auftritt. Der Druckabfall am Ventil wird dadurch verkleinert.

Die Merkmale nach Anspruch 3 bringen den Vorteil, dass beim raschen Oeffnen des Rückschlagventils im anderen Zylinderraum kein Unterdruck entsteht, der zu Kavitationserosionen führen könnte.

Die Merkmale nach Anspruch 4 bringen fertigungstechnische sowie betriebliche Vorteile, indem die Dämpfungscharakteristik des Rückschlagventils rasch und leicht angepasst werden kann.

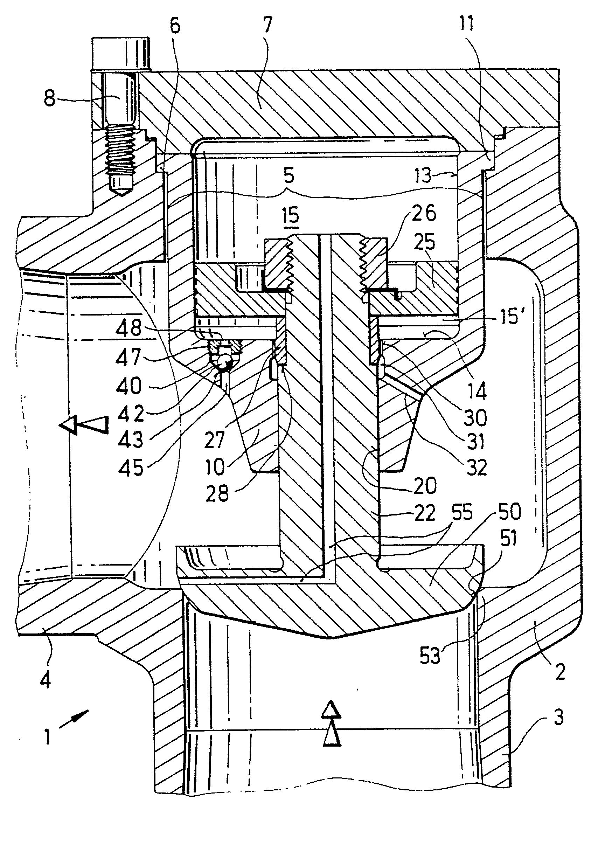

Ein Ausführungsbeispiel der Erfindung wird anhand der Zeichnung näher erläutert, die einen Axialschnitt durch ein Rückschlagventil zeigt. Das von Speisewasser einer Dampfkraftanlage durchflossene Rückschlagventil 1 umfasst ein Gehäuse 2 mit einem Eintrittstutzen 3, einem rechtwinklig dazu angeordneten Austrittstutzen 4 und einer koaxial zum Eintrittstutzen 3 angebrachten Einbauöffnung 5. Auf einer Schluter 6 der Einbauöffnung 5 sitzt ein Flansch 11 eines in das Gehäuse 2 ragenden Einsatzes 10, der als Rotationskörper ausgebildet ist und, vom flanschseitigen Ende ausgehend, eine zylindrische Bohrung 13 aufweist, die an einer Stirnfläche 14 endet. Die Einbauöffnung 5 ist durch einen Deckel 7 verschlossen, der mittels Schrauben 8 gegen den Flansch 6 gedrückt wird.

In der Bohrung 13 ist ein Kolben 25 verschiebbar angeordnet, der den von der Bohrung 13 gebildeten Raum in zwei Zylinderräume 15 und 15' unterteilt. Der Einsatz 10 weist koaxial zur Bohrung 13 eine kleinere Bohrung 20 auf, in der eine Ventilspindel 22 gleitend gelagert ist. Auf dem in die Bohrung 13 ragenden Ende der Ventilspindel 22 ist der Kolben 25 befestigt, der mittels einer Gewindemutter 26 gegen einen Dämpfungsring 27 gepresst wird, der an einer Schulter 28 der Ventilspindel 22 anliegt.

An ihrem zylinderraumseitigen Ende weist die Bohrung 20 einen Abschnitt 30 mit etwas grösserem Durchmesser auf. Zwischen diesem Abschnitt 30 und dem übrigen Teil der Bohrung 20 ist ein Ringraum 31 gebildet, von dem aus eine Schrägbohrung 32 in den vom Gehäuse 2 umschlossenen Raum führt.

Im Einsatz 10 ist, von der Stirnfläche 14 ausgehend, eine Gewindebohrung 40 vorgesehen, deren konische Partie 43 eine Sitzfläche für eine Kugel 42 bildet. An die konische Partie 43 schliesst sich eine Durchgangsbohrung 45 an. Im Gewinde der Gewindebohrung 40 sitzt eine kurze Wurmschraube 47 mit einer Bohrung 48, die die Kugel 42 am Verlassen der Gewindebohrung hindert, ihr aber einen axialen Hub erlaubt. Die Kugel 42 bildet im Zusammenwirken mit der konischen Partie 43 der Gewindebohrung 40 ein einfaches, gewichtbelastetes Rückschlagorgan.

Das dem Kolben 25 gegenüberliegende Ende der Ventilspindel 22 ist mit einem Ventilteller 50 versehen, der im Bereich seines äusseren Randes eine ringförmige Dichtfläche 51 aufweist, die mit einem im Gehäuse 2 vorgesehenen Ventilsitz 53 zusammenwirkt. In der Ventilspindel 22 und dem Ventilteller 50 verläuft eine rechtwinklige Bohrung 55, die unmittelbar oberhalb der Dichtfläche 51 endet, d. h. bei normalem Durchfluss abströmseitig der Dichtfläche 51.

Das beschriebene Rückschlagventil funktioniert wie folgt : Steigt der Wasserdruck im Eintrittstutzen 3 über jenen im Austrittstutzen 4 und überwinden dabei die Druckdifferenzen an dem beweglichen System — aus der Ventilspindel 22, dem Ventilteller 50, dem Kolben 25, der Gewindemutter 26 und dem Dämpfungsring 27 bestehend — das Gewicht dieses Systems, so wird das System angehoben. Solange dabei der Dämpfungsring 27 in den Abschnitt 30 eingetaucht ist, besteht die Möglichkeit, dass im Zylinderraum 15' ein so hoher Unterdruck entsteht, dass Wasser über das Rückschlagorgan 42 angesaugt wird. Hierdurch wird verhindert, dass im Zylinderraum 15' Verdampfung auftritt. Tritt der Dämpfungsring 27 aus dem Abschnitt 30 heraus, so erfolgt die Wasserzufuhr zum Zylinderraum 15' vollständig über die Schrägbohrung 32. Hat sich im Rückschlagventil 1 die volle Strömungsgeschwindigkeit entwickelt, so herrscht am Rand des Ventiltellers 50, nämlich an der Mündung der Winkelbohrung 55, ein Unterdruck gegenüber dem Staudruck an der Stirnfläche des Ventiltellers 50. Dieser Unterdruck wirkt über die Winkelbohrung 55 auf die obere Seite des Kolbens 25 und bringt das bewegliche System in seine obere Endlage.

Tritt nun in der Speiseleitung auf der Seite des Eintrittstutzens 3 ein Rohrbruch auf, so eilt von der Bruchstelle aus eine Unterdruckwelle durch das Rückschlagventil, die die Masse des strömenden Wassers verzögert und schliesslich in umgekehrter Richtung beschleunigt. Bei der Richtungsumkehr der Wasserströmung beginnt das bewegliche System des Rückschlagventils 1 sich in Schliessrichtung zu bewegen. Ohne die erfindungsgemässen Merkmale würde die Bewegung des Systems beschleunigt verlaufen, bis der Ventilteller mit grosser Wucht auf dem Ventilsitz auftreffen würde. Bei dieser raschen Schliessbewegung würde die mit hoher Geschwindigkeit rückwärts durch das Rückschlagventil strömende Wassermasse brüsk verzögert, was zu einem — vom Mass der Verzögerung abhängigen — starken Druckanstieg auf der Seite des Austrittstutzens des Rückschlagventils führen würde. Dieser Druckanstieg könnte einen sekündären Rohrbruch zur Folge haben.

Durch die erfindungsgemässen Merkmale taucht bei der zunächst beschleunigten Schliessbewegung des beweglichen Systems der Dämpfungsring 27 in den Abschnitt 30 ein, wodurch der Abfluss des Wassers aus dem Zylinderraum 15' gedrosselt wird. Der in diesem Zylinderraum sich aufbauende Druck bremst die Schliessbewegung, was ein weniger brüskes Verzögern der durch das Rückschlagventil 1 zurückströmenden Wassermasse bewirkt. Dementsprechend ergibt sich auf der Seite des Austrittstutzens 4 ein erheblich geringerer Druckanstieg, dem die dort angeschlossenen Leitungen standhalten können.

Ein Nachteil der Dämpfung der Ventilschliessbewegung besteht darin, dass im Fall eines Rohrbruchs eine grössere Wassermenge durch die Bruchstelle austritt. Die Dämpfung der Schliessbewegung des Ventils muss daher optimiert werden. Diese Optimierung geschieht nach der Erfindung einfach durch Aendern des Querschnittes des Dämpfungsrings 27. Um beispielsweise eine progressive Bremsung zu erzielen, kann der Dämpfungsring in seinem unteren Bereich zum Ventilteller 50 hin konisch verjüngt sein.

Die Erfindung lässt sich auf mancherlei Art abwandeln. Wird zum Beispiel das Rückschlagventil für ein gasförmiges Medium verwendet oder liegt im Falle eines flüssigen Mediums dessen Temperatur genügend tief unterhalb der Verdampfungstemperatur, so kann auf das Rückschlagorgan 42 verzichtet werden.

Statt der Schrägbohrung 32 kann an der Ventilspindel 22 eine diametrale Bohrung vorhanden sein, die nahe unterhalb der Schulter 28 verläuft und die Winkelbohrung 55 kreuzt.

Statt über die Winkelbohrung 55 kann der Zylinderraum 15 über eine durch die Wand des Einsatzes 10 führende Bohrung mit dem austrittseitigen Gehäuseraum verbunden sein. Dies hätte allerdings den Nachteil, dass das bewegliche System durch den Druckabfall am Rückschlagventil getragen werden muss. Das Rückschlagventil würde dann erst bei grösserer Durchflussmenge voll öffnen, als dies beim gezeichneten Ausführungsbeispiel der Fall ist. Die Querschnitte des Dämpfungsrings 27 und das Gegenprofil am Einsatz 10 lassen sich auch so ausbilden, dass die Dämpfung ausschliesslich oder überwiegend über einen etwa mittleren Abschnitt des Ventilhubes erfolgt.

**Ansprüche**

1. Rückschlagventil mit einem Gehäuse (2), das einen Eintrittstutzen (3) und, diesem gegenüberstehend, eine koaxiale Einbauöffnung (5) aufweist, in der ein mit einem Flansch (11) versehener Einsatz (10) mittels eines die Einbauöffnung verschliessenden Deckels (7) befestigt ist, wobei der Einsatz zusammen mit dem Deckel einen koaxial zum Eintrittstutzen angeordneten Raum (15) begrenzt, in dem ein Kolben (25) verschiebbar angeordnet ist, der den Raum in zwei Zylinderräume (15, 15') unterteilt und an dem das eine Ende einer Ventilspindel (22) befestigt ist, die eine Stirnwand des Einsatzes (10) durchdringt und am anderen Ende einen Ventilteller (50) trägt, der eine kreisförmig verlaufende Dichtfläche (51) aufweist, die mit einem im Gehäuse (2) im Bereich des Eintrittstutzens (3) vorgesehenen Ventilsitz (53) zusammenwirkt, und wobei an der Wand des Gehäuses zwischen dem Ventilsitz (53) und der Einbauöffnung (5) ein Austrittstutzen (4) angeschlossen ist, dadurch gekennzeichnet, dass von dem zwischen dem Kolben (25) und dem Deckel (7) liegenden Zylinderraum (15) ein erster Verbindungskanal (55) zum austrittseitigen Raum des Gehäuses und von dem anderen Zylinderraum (15') ein zweiter Verbindungskanal (30, 32) zum austrittseitigen Raum des Gehäuses führt und dass an dem aus dem Kolben (25), der Ventilspindel (22) und dem Ventilteller (50) bestehenden, beweglichen System ein Dämpfungskörper (27) vorgesehen ist, der bei sich schliessendem Ventil drosselnd in den zweiten Kanal (30, 32) eindringt, ihn jedoch bei sich öffnendem Ventil freigibt.

2. Rückschlagventil nach Anspruch 1, dadurch gekennzeichnet, dass der erste Verbindungskanal (55) in Längsrichtung durch die Ventilspindel (22) führt und im Bereich des Umfangs des Ventiltellers (50) nahe der Dichtfläche (51) mündet.

3. Rückschlagventil nach Anspruch 1 oder 2, dadurch gekennzeichnet, dass zum zweiten Verbindungskanal (30, 32) ein Bypasskanal (45, 48) mit einem Rückschlagorgan (42) vorgesehen ist, das so angeordnet ist, dass es eine Strömung zum anderen Zylinderraum (15') zulässt.

4. Rückschlagventil nach einem der Ansprüche 1 bis 3, dadurch gekennzeichnet, dass der Dämpfungskörper (27) als auswechselbarer Ringkörper ausgebildet ist, der zwischen einer Schulter (28) der Ventilspindel (22) und dem Kolben (25) befestigt ist.

**Claims**

1. A non-return valve comprising a body (2) having an inlet port (3) and opposite the latter a coaxial installation opening (5) in which there is secured an insert (10) having a flange (11), by means of a cover (7) closing the said opening, the insert together with the cover defining a chamber (15) which is disposed coaxially of the inlet port and in which a piston (25) is displaceably disposed and subdivides the chamber into two cylinder chambers (15, 15') and on which one end of a valve stem (22) is secured which passes through one end wall of the insert (10) and at the other end bears a valve disc (50) having a circular sealing surface (51) co-operating with a valve seat (53) provided in the body (2) near the inlet port (3), an outlet port (4) being connected to the body wall between the valve seat (53) and the opening (5), characterised in that a first connecting duct (55) leads from the cylinder chamber (15) between the piston (25) and the cover (7) to the body chamber on the outlet side and a second connecting duct (30, 32) leads from the other cylinder chamber (15') to the body chamber on the outlet side, and a damping member (27) is provided on the movable system consisting of the piston (25), the valve stem (22) and the valve disc (50) and, when the valve closes, penetrates with a throttling action into the second duct (30, 32) but releases it when the valve opens.

2. A non-return valve according to claim 1, characterised in that the first connecting duct (55) extends longitudinally through the valve stem (22) and opens out near the sealing surface (51) in the region of the periphery of the valve disc (50).

3. A non-return valve according to claim 1 or 2, characterised in that a bypass duct (45, 48) having a non-return means (42) is provided for the second connecting duct (30, 32) and is so disposed as to allow a flow to the other cylinder chamber (15').

4. A non-return valve according to any one of claims 1 to 3, characterised in that the damping member (27) is in the form of an interchangeable annular member secured between the piston (25) and a shoulder (28) of the valve stem (22).

**Revendications**

1. Clapet anti-retour comportant un carter (2) présentant un raccord d'admission (3) et, à l'opposé de ce dernier, un orifice coaxial de montage (5) dans lequel une pièce incorporée (10) munie d'un collet (11) est fixée au moyen d'un couvercle (7) obturant ledit orifice de montage, la pièce incorporée délimitant conjointement au couvercle une chambre (15) située coaxialement au raccord d'admission et dans laquelle est mobile un piston (25) divisant ladite chambre en deux chambres cylindriques (15, 15') et auquel est fixée l'une des extrémités d'une tige de clapet (22) qui traverse de part en part une paroi frontale de la pièce incorporée (10) et supporte à son autre extrémité une tête de clapet (50) munie d'une surface d'obturation (51) s'étendant circulairement et coopérant avec un siège de clapet (53) prévu dans ledit carter (2) au voisinage du raccord d'admission (3), un raccord de sortie (4) étant relié à la paroi du carter entre le siège de clapet (53) et l'orifice de montage (5), caractérisé par le fait qu'un premier canal de jonction (55) partant de la chambre cylindrique (15) intercalée entre le piston (25) et le couvercle (7) gagne la chambre située côté sortie dudit carter, et un second canal de jonction (30, 32) part de l'autre chambre cylindrique (15') pour rejoindre la chambre située côté sortie dudit carter ; et par le fait qu'il est prévu, sur le système mobile comprenant le piston (25), la tige de clapet (22) et la tête de clapet (50), un élément d'amortissement (27) qui, lorsque le clapet se ferme, pénètre dans le second canal (30, 32) en provoquant un étranglement, mais dégage ce canal lorsque le clapet s'ouvre.

2. Clapet anti-retour selon la revendication 1, caractérisé par le fait que le premier canal de jonction (55) parcourt longitudinalement la tige de clapet (22) et débouche au voisinage de la périphérie de la tête de clapet (50), à proximité de la surface d'obturation (51).

3. Clapet anti-retour selon la revendication 1 ou 2, caractérisé par le fait qu'il est prévu, en plus du second canal de jonction (30, 32), un canal de dérivation (45, 48) doté d'un organe anti-retour (42) disposé de façon à permettre un écoulement en direction de l'autre chambre cylindrique (15').

4. Clapet anti-retour selon l'une des revendications 1 à 3, caractérisé par le fait que l'élément d'amortissement (27) est réalisé sous la forme d'un corps annulaire remplaçable qui est fixé entre un épaulement (28) de la tige de clapet (22) et le piston (25).